# EUROPÄISCHE PATENTANMELDUNG

(11) **EP 3 165 274 A2**
(43) Veröffentlichungstag der Anmeldung: **10.05.2017**
(21) Anmeldenummer: 16197642.8
(22) Anmeldetag: 08.11.2016
(51) Int. Cl.: B01D 53/56, B01D 53/94

(54) **VERFAHREN ZUR SELEKTIVEN REDUKTION VON STICKOXIDEN IN HEISSEN GASEN**

(30) Priorität: 09.11.2015 AT 509532015
(71) Anmelder: M.A.L. Umwelttechnik - GmbH, 1230 Wien (AT)
(72) Erfinder: Helmreich, Christian, 1230 Wien (AT); Koglbauer, Gerald, 9184 St. Jakob im Rosental (AT); Koglbauer, Karin, 9184 St. Jakob im Rosental (AT)
(74) Vertreter: Puchberger & Partner Patentanwälte

(57) **Zusammenfassung**

Die vorliegende Erfindung gibt ein Verfahren zur selektiven Reduktion von Stickoxiden in heißen Gasen mittels mindestens einer organischen Heteroverbindung, ausgewählt aus organischen Sauerstoff-Heteroverbindungen, Stickstoff-Heteroverbindungen, Schwefel-Heteroverbindungen und Mischungen davon, als Reduktionsmittel an.

## Beschreibung

### Gebiet der Erfindung

Die vorliegende Erfindung betrifft das Gebiet der Entstickung von heißen Gasen durch selektive nicht-katalytische Reduktion (SNCR) oder selektive katalytische Reduktion (SCR) der Stickoxide.

### Stand der Technik

Die in Verbrennungsprozessen unterschiedlicher Art als Nebenprodukt entstehenden Stickoxide (NOₓ), deren anfallende Menge von einer ganzen Reihe von Prozessparametern beeinflusst wird, gelten als wichtiger Faktor bei der Versauerung der Umwelt und der globalen Erwärmung. Gesetzliche Bestimmungen limitieren daher die maximal zulässigen Emissionen. In manchen Ländern gibt es zudem steuerliche Anreize, die die Betreiber von Verbrennungsanlagen motivieren, die zulässigen Emissionswerte möglichst noch zu unterschreiten.

Die Maßnahmen zur Reduktion der NOₓ-Emissionen umfassen einerseits feuerungstechnische Maßnahmen, deren Ziel die weitgehende Unterdrückung der NOₓ-Bildung während des Verbrennungsprozesses ist, und andererseits die dem Verbrennungsprozess nachgelagerten Sekundärmaßnahmen zur weitestgehenden Eliminierung der entstanden Stickoxide. Die gängigen Sekundärmaßnahmen lassen sich allgemein in Verfahren der selektiven katalytischen Reduktion (SCR) und der selektiven nicht-katalytischen Reduktion (SNCR) unterteilen.

Sowohl das Verfahren der selektiven katalytischen Reduktion von Stickoxiden (NOₓ) als auch das Verfahren der selektiven nicht-katalytischen Reduktion von Stickoxiden beruht auf dem chemischen Prinzip der Komproportionierung von Stickstoff. Bei der Komproportionierung wird durch gleichzeitige Reduktion und Oxidation aus einer höheren Oxidationsstufe, z.B. +II in Sickstoffmonoxid (NO), und einer niedrigeren Oxidationsstufe, z.B. -III in Ammoniak (NH₃), zweier Atome des gleichen Elements, in diesem Fall Stickstoff (N), eine dazwischen liegende Oxidationsstufe, in diesem Fall ±0 in Stickstoffgas (N₂), gebildet. Die Reaktion kann vereinfacht wie folgt dargestellt werden:
Reaktion 1: Komproportionierung von Stickstoffmonoxid und Ammoniak zu Stickstoff und Wasser

   6 N^{(+II)}O + 4 N^{(-III)}H₃ → 5 N₂^{(±0)} + 6 H₂O

Bei der SCR wird Ammoniak in den Gasstrom eingedüst und bewirkt die Umwandlung der Stickoxide in Stickstoff und Wasser (vgl. Reaktion 1), wobei die Reaktion durch einen Katalysator beschleunigt wird. Je nach Katalysator, erfolgt die Reaktion in einem Temperaturbereich von etwa 300 bis 450 °C.

Bei den bekannten SNCR-Verfahren wird Ammoniak oder Harnstoff eingedüst, wobei die Umwandlung der Stickoxide in Stickstoff und Wasser ohne den Einsatz eines Katalysators erfolgt. Die Reaktion wird in einem Temperaturbereich von etwa 900 bis 1050 °C durchgeführt. Dieses Temperaturfenster ist für eine maximale NOₓ-Eliminierung bei möglichst geringem Ammoniakschlupf unbedingt einzuhalten. Oberhalb dieses Bereichs wird in einer Nebenreaktion zunehmend Ammoniak oxidiert, so dass sich Stickoxide bilden. Bei Temperaturen unterhalb dieses Bereichs verringert sich die Reaktionsgeschwindigkeit, wodurch der Ammoniakschlupf zunimmt.

Das SNCR-Verfahren bedarf generell einer besonders sorgfältigen Regelung. Beispielsweise müssen der Ort und die Art der Eindüsung der Reagenzien in Abhängigkeit von Kesselbauart, Kessellasten, Kesselablagerungen etc. variiert werden. Um größeren Temperaturschwankungen und Temperaturschieflagen, wie sie während des Betriebs vorkommen können, entgegenzuwirken, können beispielsweise zwei Eindüseebenen, zwischen denen umgeschaltet werden kann, oder flexible Eindüsesysteme, die dem Temperaturprofil stufenlos folgen, vorgesehen sein.

Weiters spielt der Durchmesser der Ammoniak-/Harnstofflösungströpfchen eine wesentliche Rolle, sodass die Wahl der geeigneten Eindüselanzen von besonderer Bedeutung ist. Neben der Tröpfchengröße bestimmt auch die Verdünnung des Reagenz die Verweilzeit und die Tiefe der Penetration des Reagenz in das Abgas. Inhomogenitäten in der Stickoxid-/Reduktionsmittelverteilung und kürzere Verweilzeiten im optimalen Temperaturfenster verschlechtern das Ergebnis insofern, als sich vermehrt nicht umgesetztes Reduktionsmittel bemerkbar macht, d.h. der sogenannte Ammoniakschlupf zunimmt.

Ziel des Entstickungsverfahrens ist es stets, die gewünschte NOₓ-Abscheidung und den gewünschten niedrigen Ammoniakschlupf bei möglichst geringem Reduktionsmittelverbrauch zu erreichen. Aufgrund der erforderlichen überstöchiometrischen Reduktionsmittelzugabe liegt der Reduktionsmittelverbrauch bei einem SCNR-Verfahren generell höher als beispielsweise beim SCR-Verfahren. Für eine Verringerung des Reduktionsmittelverbrauchs ist eine aufwändige Optimierung der Eindüsetechnik erforderlich.

Ein wichtiges Indiz für die Qualität des Entstickungsvorgangs ist das Ausmaß der unerwünschten Nebenreaktionen. Die entstehenden Nebenprodukte, wie z.B. Ammoniumsulfat, Ammoniumhydrogensulfat, Ammoniumchlorid oder Lachgas, können zum einen umweltrelevante Wirkungen, zum anderen schädliche Einflüsse auf die Verbrennungsanlage (z.B. Korrosion) haben.

Neben verfahrenstechnischen Problemen beispielsweise des SCNR-Verfahrens sind auch die sich aus der Verwendung der herkömmlichen stickstoffhaltigen Reduktionsmittel ergebenen Umweltgefährdungen zu berücksichtigen. Beispielsweise ist Ammoniak ein giftiges und leicht brennbares Gas, das im Allgemeinen in Form einer wässrigen Lösung verwendet wird. Bei steigenden Temperaturen dampft das Ammoniak jedoch leicht aus der Lösung aus, weshalb Sicherheitsvorkehrungen etwa bei der Lagerung und Aufbereitung erforderlich sind.

Aufgabe der Erfindung ist es, ein verbessertes Verfahren zu Entstickung heißer Gase anzugeben, das oben genannte Probleme des Standes der Technik überwindet.

### Zusammenfassung der Erfindung

Die vorliegende Erfindung gibt ein Verfahren zur selektiven Reduktion von in heißen Gasen enthaltenen Stickoxiden mittels mindestens einer organischen Heteroverbindung, ausgewählt aus organischen Sauerstoff-Heteroverbindungen, Stickstoff-Heteroverbindungen, Schwefel-Heteroverbindungen und Mischungen davon, als Reduktionsmittel an.

Gemäß einem Merkmal der Erfindung wird mindestens eine organische Heteroverbindung in ein ruhendes Gas oder in einen Gasstrom dosiert.

In einer bevorzugten Ausführungsform der Erfindung ist die organische Heteroverbindung eine Sauerstoff-Heteroverbindung, die aus geradkettigen, verzweigten oder ringförmigen Ethern und geradkettigen, verzweigten oder ringförmigen Polyethern aliphatischer Kohlenwasserstoffe ausgewählt ist.

In einer Ausführungsform ist die als Reduktionsmittel verwendete organische Sauerstoff-Heteroverbindung aus der aus Trioxan, Ethylmethylether, Diethylether, Ethylglykol, Methylglykol, Ethylenglykol-dimethylether, Diethylenglykol, Triethylenglykol, Diethylenglykolmonoethylether, Diethylenglykoldiethylether, Diethylenglykoldimethylether, Diisopropylether, 1,1,3,3-Tetramethoxypropan, Neopentyl-glykoldiglycidyl-ether, Tetrahydropyran, Dioxan, 2-Tetrahydropyranol, 5-m-Dioxanol, 1,4-Dioxan-2,5-diol und Kronenethern bestehenden Gruppe ausgewählt.

In einer bevorzugten Ausführungsform ist die als Reduktionsmittel verwendete organische Sauerstoff-Heteroverbindung ein Polyethylenglykol oder eine Mischung von Polyethylenglykolen. Vorzugsweise ist das Polyethylenglykol (bzw. sind die Polyethylenglykole) aus Polyethylenglykolen mit einer relativen Molekülmasse von mindestens 200 bis einschließlich etwa 35000 ausgewählt.

In einer weiteren Ausführungsform der Erfindung ist die organische Heteroverbindung eine Sauerstoff-Heteroverbindung, die aus geradekettigen, verzweigten oder ringförmigen Alkoholen und geradkettigen, verzweigten oder ringförmigen Polyalkoholen aliphatischer Kohlenwasserstoffe ausgewählt ist.

In einer weiteren Ausführungsform ist die als Reduktionsmittel verwendete organische Sauerstoff-Heteroverbindung aus der aus Propanol, Isopropanol, Butanol, Isobutanol, t-Butanol, Glycerol, Cyclohexanol, Cyclohexandiol und Cyclohexanhexol (Inositol) bestehenden Gruppe ausgewählt.

In einer weiteren Ausführungsform der Erfindung wird ein beliebiges Gemisch von geradkettigen, verzweigten oder ringförmigen Ethern/Polyethern aliphatischer Kohlenwasserstoffe und geradkettigen, verzweigten oder ringförmigen Alkoholen/Polyalkoholen aliphatischer Kohlenwasserstoffe als Reduktionsmittel verwendet.

In einer weiteren Ausführungsform der Erfindung ist das Reduktionsmittel ein beliebiges Gemisch von Trioxan, Ethylmethylether, Diethylether, Ethylglykol, Methylglykol, Ethylenglykol-dimethylether, Diethylenglykol, Triethylenglykol, Polyethylenglykolen, Diethylenglykolmonoethylether, Diethylenglykoldiethylether, Diethylenglykol-dimethylether, Diisopropylether, 1,1,3,3-Tetramethoxypropan, Neopentylglykol-diglycidylether, Tetrahydropyran, Dioxan, 2-Tetrahydropyranol, 5-m-Dioxanol, 1,4-Dioxan-2,5-diol, Kronenethern, Propanol, Isopropanol, Butanol, Isobutanol, t-Butanol, Glycerol, Cyclohexanol, Cyclohexandiol und Cyclohexanhexol (Inositol).

In einer weiteren bevorzugten Ausführungsform der Erfindung ist die organische Heteroverbindung eine Sauerstoff-Heteroverbindung, die aus Polyoxymethylen als Paraformaldehyd, Polyoxymethylen als stabilisiertes Polymer (POM), Polyoxymethylen-Copolymeren (POM-C) und Mischungen davon ausgewählt ist. Es kann eine Lösung oder Suspension von Polyoxymethylen als Paraformaldehyd, Polyoxymethylen als stabilisiertes Polymer (POM), Polyoxymethylen-Copolymeren (POM-C) oder deren Mischungen verwendet werden. Optional ist in der Suspension oder Mischung ein Lösungsvermittler oder Stabilisator, vorzugsweise ausgewählt aus Methanol, Ethanol und Isopropanol, enthalten.

In einer weiteren Ausführungsform kann die organische Heteroverbindung ein beliebiges Gemisch von geradkettigen, verzweigten oder ringförmigen Ethern/Polyethern aliphatischer Kohlenwasserstoffe und geradkettigen, verzweigten oder ringförmigen Alkoholen/Polyalkoholen aliphatischer Kohlenwasserstoffe sein, das zusätzlich mindestens eines aus der Gruppe Polyoxymethylen als Paraformaldehyd, Polyoxymethylen als stabilisiertes Polymer (POM) und Polyoxymethylen-Copolymere (POM-C) enthält.

In einer Ausführungsform der Erfindung ist die organische Heteroverbindung eine Mischung aus
(a) mindestens einer Sauerstoff-Heteroverbindung, ausgewählt aus Trioxan, Methylglykol, Ethylglykol, Diethylenglykol, Diethylenglykol-monoethylether, Triethylenglykol, Diethylenglykol-diethylether und einem Polyethyenglykol von PEG 200 bis einschließlich PEG 35000, und
(b) mindestens einer Sauerstoff-Heteroverbindung, ausgewählt aus Polyoxymethylen als Paraformaldehyd, Polyoxymethylen als stabilisiertes Polymeres (POM) und Polyoxymethylen-Copolymeren (POM-C).

In einer Ausführungsform der Erfindung ist die organische Heteroverbindung eine organische Stickstoff-Heteroverbindung, die vorzugsweise aus Diethylentriamin, Urotropin (Hexamethylentetramin), Cyclen (1,4,7,10-Tetraazacyclododecan) und Mischungen davon ausgewählt ist. Es kann eine Lösung der vorzugsweise aus Diethylentriamin, Urotropin (Hexamethylentetramin), Cyclen (1,4,7,10-Tetraazacyclododecan) und deren Mischungen ausgewählten organischen Stickstoff-Heteroverbindung als Reduktionsmittel verwendet werden.

In einer weiteren Ausführungsform ist die organische Heteroverbindung eine Mischung aus
(a) mindestens einer Sauerstoff-Heteroverbindung, ausgewählt aus Trioxan, Methylglykol, Ethylglykol, Diethylenglykol, Diethylenglykol-monoethylether, Triethylenglykol, Diethylenglykol-diethylether, einem Polyethyenglykol von PEG 200 bis einschließlich PEG 35000, Polyoxymethylen als Paraformaldehyd, Polyoxymethylen als stabilisiertes Polymer (POM) und Polyoxymethylen-Copolymeren (POM-C), und
(b) mindestens einer Stickstoff-Heteroverbindung, ausgewählt aus Diethylentriamin, Urotropin (Hexamethylentetramin) und Cyclen (1,4,7,10-Tetraazacyclododecan).

Gemäß einem weiteren Merkmal der Erfindung wird das eine organische Heteroverbindung umfassende Reduktionsmittel in einem Lösungsmittel verwendet, das vorzugsweise aus der aus Wasser, Methanol, Methanol-Wasser-Gemischen, Ethanol, Ethanol-Wasser-Gemischen, Methanol-Ethanol-Gemischen, Methanol-Ethanol-Wasser-Gemischen, Isopropanol, Isopropanol-Wasser-Gemischen, Isopropanol-Methanol-Gemischen, Isopropanol-Methanol-Wasser-Gemischen, Isopropanol-Ethanol-Gemischen, Isopropanol-Ethanol-Wasser-Gemischen, Isopropanol-Methanol-Ethanol-Gemischen und Isopropanol-Methanol-Ethanol-Wasser-Gemischen bestehenden Gruppe ausgewählt ist.

Gemäß einem weiteren Merkmal der Erfindung enthält die das Reduktionsmittel enthaltende Lösung ferner kurzkettige Kohlenhydrat-Ether, vorzugsweise kurzkettige Kohlenhydrat-Ether mit einer Molekülmasse von höchstens 1000 g/mol. Beispielsweise kann der Kohlenhydrat-Ether Methylcellulose sein.

Gemäß einem weiteren Merkmal der Erfindung wird zusätzlich zu dem eine organische Heteroverbindung umfassenden Reduktionsmittel eine reduzierende Stickstoffverbindung eingesetzt, die aus der aus Harnstoff, Harnstofflösung, Ammoniak, Ammoniaklösung und deren Gemischen bestehenden Gruppe ausgewählt ist.

Gemäß einem weiteren Merkmal der Erfindung werden die mindestens eine organische Heteroverbindung und die reduzierende Stickstoffverbindung gleichzeitig oder in beliebiger Reihenfolge, am selben Ort oder örtlich getrennt, in ein ruhendes Gas oder einen Gasstrom dosiert.

Die Erfindung betrifft auch die Verwendung mindestens einer organischen Heteroverbindung, ausgewählt aus organischen Sauerstoff-Heteroverbindungen, Stickstoff-Heteroverbindungen, Schwefel-Heteroverbindungen und Mischungen davon, als Reduktionsmittel in einem Verfahren zur selektiven Reduktion von in heißen Gasen enthaltenen Stickoxiden.

Weiters betrifft die Erfindung eine Vorrichtung zur selektiven Reduktion von in heißen Gasen enthaltenen Stickoxiden nach dem vorstehend offenbarten Verfahren.

### Kurze Beschreibung der Zeichnungen

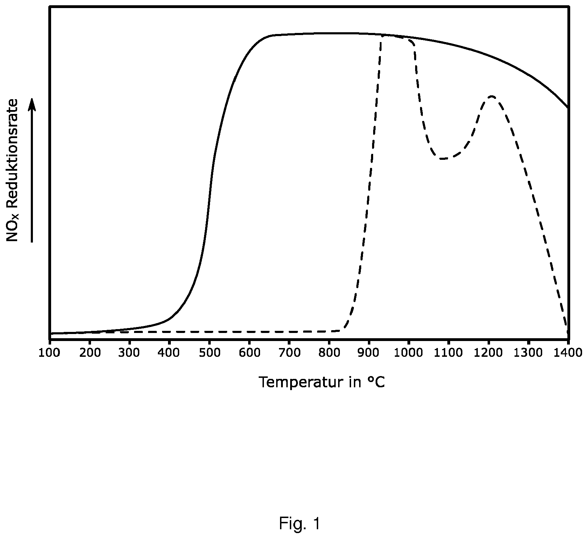

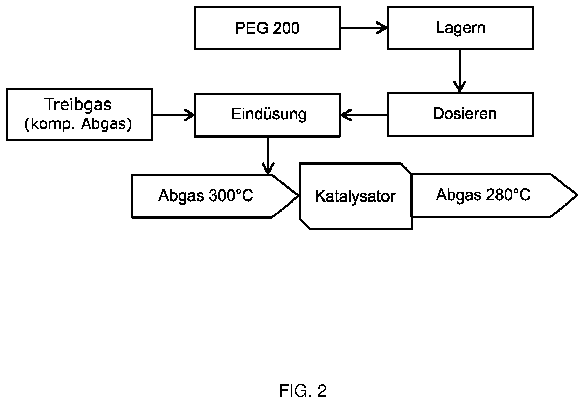

Die Fig. 1 zeigt die NOₓ-Reduktionsrate als Funktion der Temperatur für ein SNCR-Verfahren unter Verwendung eines herkömmlichen Reduktionsmittels (durchbrochene Linie) bzw. einer organischen Heteroverbindung gemäß der Erfindung (durchgezogene Linie). Die Fig. 2 bis 5 zeigen Flussdiagramme verschiedener Ausführungsformen des erfindungsgemäßen Verfahrens.

### Ausführliche Beschreibung der Erfindung

Erfindungsgemäß werden eine oder mehrere organische Heteroverbindungen als Reduktionsmittel in einem Verfahren zur selektiven Reduktion von Stickoxiden in heißen Gasen verwendet. Gemäß einer Ausführungsform kann die mindestens eine organische Heteroverbindung als alleiniges Reduktionsmittel verwendet werden.

Unter dem Ausdruck "selektiv", wie er hier verwendet wird, ist zu verstehen, dass die Reaktion zwischen den Hauptreaktionspartnern im Wesentlichen ohne Nebenreaktionen mit anderen vorhandenen Stoffen abläuft.

Die Reduktion kann katalytisch oder nicht-katalytisch erfolgen. Unter dem Ausdruck "nicht-katalytisch", wie er hier verwendet wird, ist zu verstehen, dass die Reaktionen ohne äußeren Einfluss eines Katalysators in Form eines oberflächenaktiven Anlagenbauteils stattfinden.

Unter dem Ausdruck "Stickoxide", wie er hier verwendet wird, sind alle unter den Reaktionsbedingungen gasförmig vorliegenden Stickstoff-Sauerstoff-Verbindungen, einschließlich der Stickstoff-Sauerstoff-Wasserstoff-Verbindungen, zu verstehen.

Unter dem Ausdruck "heiße Gase", wie er hier verwendet wird, sind Gase mit einer Temperatur von mehr als 150 °C (423,15 K) zu verstehen, welche mit einer Verbrennungsreaktion gekoppelt sind und vor, bei oder nach der Verbrennungsreaktion einen messbaren Anteil an Stickoxiden enthalten.

Der Erfindung liegen die chemischen Eigenschaften organischer Heteroverbindungen zugrunde. Das Verfahren nutzt die chemischen Eigenschaften von Stickoxiden als Oxidationsmittel in Kombination mit den chemischen Eigenschaften von Kohlenwasserstoffen als Reduktionsmittel. Genauer gesagt, basiert die Erfindung auf der Reaktion zwischen Stickstoffverbindungen in einer höheren Oxidationsstufe, z.B. +II in Sickstoffmonoxid (NO), und einer Kohlenstoffverbindung in einer niedrigeren Oxidationsstufe, dem Methylen (:CH₂). Methylen ist die einfachste stabile Kohlenwasserstoffverbindung. Der Kohlenstoff liegt in der Oxidationsstufe -II vor. Außerdem enthält die Verbindung zwei ungepaarte Elektronen (dargestellt als zwei Punkte vor dem C-Symbol) und ist daher sehr reaktiv. Die Reaktion kann vereinfacht wie folgt dargestellt werden:
Reaktion 2: Redoxreaktion von Stickstoffmonoxid und Methylen zu Stickstoff, Kohlenmonoxid und Wasser

   2 N^{(+II)}O + :C^{(-II)}H₂ → N₂^{(±0)} + C^{(+II)}O + H₂O

Das in der Reaktion 2 als Nebenprodukt auftretende Kohlenmonoxid nimmt seinerseits wieder an anderen, Stickoxid-abbauenden, Reaktionen teil und unterstützt somit die Wirksamkeit von Methylen. Zwei wesentliche Reaktionen sind nachfolgend als Reaktion 3 und 4 dargestellt:
Reaktion 3: Redoxreaktion von Stickstoffdioxid und Kohlenmonoxid zu Stickstoffmonoxid und Kohlendioxid

   N^{(+IV)}O₂ + C^{(+II)}O → N^{(+II)}O + C^{(+IV)}O₂
Reaktion 4: Redoxreaktion von Distickstoffmonoxid und Kohlenmonoxid zu Stickstoff und Kohlendioxid

   N₂^{(+I)}O + C^{(+II)}O → N₂^{(±0)} + C^{(+IV)}O₂

Die Reaktionsfähigkeit von Methylen verhindert jedoch den direkten Einsatz der Substanz als Reduktionsmittel. Es ist aus Verfahren des Standes der Technik bekannt, dass bei der Pyrolyse von organischen Verbindungen anteilsmäßig auch Methylen entsteht. In diesen bekannten Verfahren ist die Wirkung der Stickoxid-Reduktion mitunter auf die Reaktion von Methylen (vgl. Reaktion 2) zurückzuführen. Die Art und Menge der entstehenden molekularen Bruchstücke ist jedoch zufällig und in Anbetracht der veränderlichen Reaktionsbedingungen, z.B. Temperatur- und Druckänderungen oder unterschiedliche Gaszusammensetzung, kaum vorhersehbar bzw. steuerbar. Bei den bekannten Verfahren ist also keine gezielte Bereitstellung von Methylen "in situ" und somit keine Dosierung möglich.

Im erfindungsgemäßen Verfahren werden als Reduktionsmittel chemisch definierte Vorläufersubstanzen ("Precurser") in das heiße Gas eingebracht, wo dann spontan über Zwischenstufen die überwiegend definierte Pyrolyse zu Methylen (:CH₂) erfolgt. Das in den erfindungsgemäß verwendeten organischen Heteroverbindungen enthaltene Heteroatom unterstützt die Reaktion durch seine katalytischen Eigenschaften bei der Radikalbildung in den Reaktionen der Zwischenstufen. Diese Radikalbildung ist die Ausgangsreaktion für die Methylenbildung und in Folge für die Reduktion der Stickoxide zu Stickstoff. Die Radikalbildungsreaktionen können wie folgt dargestellt werden:
Reaktion 5: Beispiel für Radikalbildung durch den Ether-Zerfall

   -CH₂-O-CH₂- → -CH₂-O• + •CH₂-
Reaktion 6: Beispiel für Radikalbildung durch den Alkohol-Zerfall

   -CH₂-OH → -CH₂• + •OH

Die entstehenden kurzkettigen Radikale reagieren weiter und bilden dabei Methylen, welches damit für die Reaktion mit Stickoxiden bereit steht, wie in der nachfolgenden Reaktion 7 dargestellt:
Reaktion 7: Beispiel für Methylenbildung durch den radikalischen Abbau von Heteroverbindungen

   -CH₂-O-CH₂-CH₂• + •OH → -CH₂-O-CH=CH₂• + H₂O -CH₂-O-CH=CH₂• → -CH₂• + HCO• + :CH₂ HCO• + H₂O CO + H₂ + •OH

Das Heteroatom dient als definierte Bruchstelle für ein ring- oder kettenförmiges Molekül. Das führt zu einem überwiegend gleichzeitigen und im Wesentlichen homogenen Zerfall entlang der gesamten Molekülkette. Dieser Reaktionsverlauf stellt das Gegenteil einer typischen Pyrolyse von langkettigen reinen Kohlenwasserstoffen (z.B. Paraffinen) dar (vgl. Reaktion 8), bei denen es unter gleichen Reaktionsbedingungen zur Wasserstoffabspaltung entlang des Kohlenstoffgerüsts kommt, ohne dass dieses bricht (Carbonisierung).
Reaktion 8: Wasserstoffbildung während der Pyrolyse von langkettigen Kohlenwasserstoffen ohne Kettenbruch

   [-CH₂-CH₂-CH₂-CH₂-CH₂-CH₂-] → [-CH=CH-CH₂-CH=CH-CH₂-] + 2 H₂

Demgegenüber wird in dem erfindungsgemäßen Verfahren Methylen gezielt als Reduktionsmittel für Stickoxide eingesetzt und insbesondere "in situ", durch Bildung aus chemisch definierten Vorläufersubstanzen ("Precurser"), i.e. den organischen Heteroverbindungen, bereitgestellt.

Die Vorläufersubstanzen können flüssig oder fest sein. Flüssige Vorläufersubstanzen werden direkt oder in Verdünnung mit einem Lösungsmittel angewendet. Feste Vorläufersubstanzen werden direkt, als Lösung oder stabilisierte Suspension ("Reaktions-Milch") angewendet. Ebenfalls zum Einsatz kommen Gemische unterschiedlicher Vorläufersubstanzen, sowohl als Feststoff, als Lösung als auch als stabilisierte Suspension.

Für das erfindungsgemäße Verfahren sind insbesondere Substanzen geeignet, die einen chemisch definierten Aufbau besitzen und kettenförmige oder cyclische Heteroverbindungen mit wiederkehrenden niedermolekularen Strukturen sind. Unter niedermolekularen Strukturen sind Unter-Strukturen aus einem, zwei oder drei Kohlenstoffatomen zu verstehen. Als Heteroatome im chemisch definierten Aufbau der Strukturen sind, gereiht nach ihrer Wichtigkeit, Sauerstoff, Stickstoff und Schwefel zu verstehen.

Besonders bevorzugt sind die erfindungsgemäß eingesetzten organischen Heteroverbindungen Sauerstoff-Heteroverbindungen. Der in den Verbindungen enthaltene Sauerstoff wird in der Pyrolysereaktion in Wasser, Kohlenmonoxid und Kohlendioxid gebunden. Dadurch hat er keine nachteiligen Auswirkungen auf die Reaktion selbst. Im Gegenteil, es kann zu einer positiven Beeinflussung der Schadstoffreduktion durch gebildetes Kohlenmonoxid kommen (vgl. Reaktion 3 und 4). In den nachstehenden Reaktionen 9 und 10 ist die Pyrolyse bevorzugter Sauerstoff-Heteroverbindungen dargestellt:
Reaktion 9: Pyrolyse von Polyoxymethylen (POM) zu Methylen, Kohlenmonoxid, Wasserstoff und Wasser

   [-CH₂-O-CH₂-O-CH₂-O-] → :CH₂ + 2 CO + H₂ + H₂O
Reaktion 10: Pyrolyse von Polyethylenoxid (PEG) zu Methylen, Kohlenmonoxid, Wasserstoff und Wasser

   [-CH₂-CH₂-O-CH₂-CH₂-O-CH₂-CH₂-O-] → 3 :CH₂ + 3 CO + 3 H₂ + H₂O

Erfindungsgemäß kann die organische Sauerstoff-Heteroverbindung aus geradkettigen, verzweigten oder ringförmigen Ethern und geradkettigen, verzweigten oder ringförmigen Polyethern aliphatischer Kohlenwasserstoffe ausgewählt sein.

Die geradkettigen Ether bzw. Polyether können beispielsweise aus Ethylmethylether, Diethylether, Ethylglykol, Methylglykol, Ethylenglykol-dimethylether, Diethylenglykol, Triethylenglykol, Diethylenglykol-monoethylether, Diethylenglykol-diethylether, Diethylenglykol-dimethylether, Polyethylenglykolen und dergleichen ausgewählt sein.

Die verzweigten Ether bzw. Polyether können beispielsweise aus Diisopropylether, 1,1,3,3-Tetramethoxypropan, Neopentyl-glykol-diglycidyl-ether und dergleichen ausgewählt sein.

Die ringförmigen Ether bzw. Polyether können beispielsweise aus Trioxan, Tetrahydropyran, Dioxan, 2-Tetrahydropyranol, 5-m-Dioxanol, 1,4-Dioxan-2,5-diol, Kronenethern und dergleichen ausgewählt sein.

Erfindungsgemäß kann die organische Sauerstoffverbindung aus geradekettigen, verzweigten oder ringförmigen Alkoholen und geradkettigen, verzweigten oder ringförmigen Polyalkoholen aliphatischer Kohlenwasserstoffe ausgewählt sein.

Die geradkettigen oder verzweigten Alkohole bzw. Polyole können beispielsweise aus Propanol, Isopropanol, Butanol, Isobutanol, t-Butanol, Glycerol und dergleichen ausgewählt sein.

Die ringförmigen Alkohole bzw. Polyole können beispielsweise aus Cyclohexanol, Cyclohexandiol, Cyclohexanhexol (Inositol) und dergleichen ausgewählt sein.

Gemäß einer besonders bevorzugten Ausführungsform ist die organische Sauerstoff-Heteroverbindung eine, die sowohl mindestens eine Etherbindung als auch mindestens eine OH-Gruppe aufweist. Nicht einschränkende Beispiele für solche Verbindungen sind Ethylglykol, Methylglykol, Diethylenglykol, Triethylenglykol, Diethylenglykolmonoethylether, Polyethylenglykole, 2-Tetrahydropyranol, 5-m-Dioxanol, 1,4-Dioxan-2,5-diol und dergleichen. Wegen ihrer Unbedenklichkeit besonders bevorzugt sind Polyethylenglykole, vorzugsweise mit einer relativen Molekülmasse von mindestens etwa 200 bis einschließlich etwa 35 000.

In einer weiteren bevorzugten Ausführungsform können die erfindungsgemäß eingesetzten Sauerstoff-Heteroverbindungen aus der Gruppe, bestehend aus Polyoxymethylen als Paraformaldehyd, Polyoxymethylen als stabilisiertes Polymer (POM), Polyoxymethylen-Copolymeren (POM-C) und Mischungen davon, ausgewählt sein. Es kann eine Lösung oder Suspension von Polyoxymethylen als Paraformaldehyd, Polyoxymethylen als stabilisiertes Polymer (POM), Polyoxymethylen-Copolymeren (POM-C) oder deren Mischungen verwendet werden. Optional ist in der Suspension oder Mischung ein Lösungsvermittler oder Stabilisator, vorzugsweise ausgewählt aus Methanol, Ethanol und Isopropanol, enthalten.

Erfindungsgemäß kann ein beliebiges Gemisch geradkettiger, verzweigter oder ringförmiger Ether bzw. Polyether aliphatischer Kohlenwasserstoffe und geradkettiger, verzweigter oder ringförmiger Alkohole bzw. Polyalkohole aliphatischer Kohlenwasserstoffe verwendet werden. Beispielsweise kann ein beliebiges Gemisch von Trioxan, Ethylmethylether, Diethylether, Ethylglykol, Methylglykol, Ethylenglykoldimethylether, Diethylenglykol, Triethylenglykol, Polyethylenglykolen, Diethylenglykolmonoethylether, Diethylenglykoldiethylether, Diethylenglykoldimethylether, Diisopropylether, 1,1,3,3-Tetramethoxypropan, Neopentyl-glykoldiglycidyl-ether, Tetrahydropyran, Dioxan, 2-Tetrahydropyranol, 5-m-Dioxanol, 1,4-Dioxan-2,5-diol, Kronenethern, Propanol, Isopropanol, Butanol, Isobutanol, t Butanol, Glycerol, Cyclohexanol, Cyclohexandiol und Cyclohexanhexol (Inositol) als Reduktionsmittel verwendet werden. Gegebenenfalls kann ein solches Gemisch zusätzlich mindestens eines aus der Gruppe, bestehend aus Polyoxymethylen als Paraformaldehyd, Polyoxymethylen als stabilisiertes Polymer (POM), Polyoxymethylen-Copolymeren (POM-C) und Mischungen davon, enthalten.

Die organische Heteroverbindung kann auch eine Mischung aus
(a) mindestens einer Sauerstoff-Heteroverbindung, ausgewählt aus Trioxan, Methylglykol, Ethylglykol, Diethylenglykol, Diethylenglykol-monoethylether, Triethylenglykol, Diethylenglykol-diethylether und einem Polyethyenglykol von PEG 200 bis einschließlich PEG 35000, und
(b) mindestens einer Sauerstoff-Heteroverbindung, ausgewählt aus Polyoxymethylen als Paraformaldehyd, Polyoxymethylen als stabilisiertes Polymeres (POM) und Polyoxymethylen-Copolymeren (POM-C), sein.

Besonders bevorzugt eingesetzte flüssige Sauerstoff-Heteroverbindungen sind
- Trioxan, Einsatz ab ca. 150 °C
- Methylglykol, Einsatz ab ca. 280 °C
- Ethylglykol, Einsatz ab ca. 280 °C
- Diethylenglykol, Einsatz ab ca. 250 °C
- Diethylenglykol-monoethylether, Einsatz ab ca. 190 °C
- Triethylenglykol, Einsatz ab ca. 290 °C
- Diethylenglykol-diethylether, Einsatz ab ca. 170 °C
- Polyethyenglykol (PEG) bis einschließlich PEG 600, Einsatz ab ca. 130 °C

Besonders bevorzugt eingesetzte halbfeste und feste Sauerstoff-Heteroverbindungen sind
- Polyethyenglykole (PEG) ab PEG 600 (bis 35.000), Einsatz ab ca. 130 °C
- Polyoxymethylen als Paraformaldehyd, Einsatz ab ca. 130 °C
- Polyoxymethylen als stabilisiertes Polymer (POM), Einsatz ab ca. 220 °C
- Polyoxymethylen-Copolymere (POM-C); Einsatz ab ca. 220 °C

Erfindungsgemäß kommt das Reduktionsmittel, das mindestens eine flüssige oder lösliche organische Sauerstoff-Heteroverbindung aufweist, in einem Lösungsmittel gelöst zum Einsatz. Das verwendete Lösungsmittel ist vorzugsweise aus der aus Wasser, Methanol, Methanol-Wasser-Gemischen, Ethanol, Ethanol-Wasser-Gemischen, Methanol-Ethanol-Gemischen, Methanol-Ethanol-Wasser-Gemischen, Isopropanol, Isopropanol-Wasser-Gemischen, Isopropanol-Methanol-Gemischen, Isopropanol-Methanol-Wasser-Gemischen, Isopropanol-Ethanol-Gemischen, Isopropanol-Ethanol-Wasser-Gemischen, Isopropanol-Methanol-Ethanol-Gemischen und Isopropanol-Methanol-Ethanol-Wasser-Gemischen bestehenden Gruppe ausgewählt.

Erfindungsgemäß kommt das Reduktionsmittel, das mindestens eine feste, schwer- bzw. unlösliche organische Sauerstoff-Heteroverbindung aufweist, in einem

Dispergiermittel suspendiert zum Einsatz ("Reaktions-Milch"). Das verwendete Dispergiermittel ist vorzugsweise aus der aus Wasser, Methanol, Methanol-Wasser-Gemischen, Ethanol, Ethanol-Wasser-Gemischen, Methanol-Ethanol-Gemischen, Methanol-Ethanol-Wasser-Gemischen, Isopropanol, Isopropanol-Wasser-Gemischen, Isopropanol-Methanol-Gemischen, Isopropanol-Methanol-Wasser-Gemischen, Isopropanol-Ethanol-Gemischen, Isopropanol-Ethanol-Wasser-Gemischen, Isopropanol-Methanol-Ethanol-Gemischen und Isopropanol-Methanol-Ethanol-Wasser-Gemischen bestehenden Gruppe ausgewählt.

Die ein Lösungsmittel, Dispergiermittel oder Lösungsmittelgemisch und mindestens eine organische Sauerstoff-Heteroverbindung umfassende Lösung kann zusätzlich kurzkettige Kohlenhydrat-Ether, vorzugsweise kurzkettige Kohlenhydrat-Ether mit einer Molekülmasse von höchstens 1000 g/mol, enthalten. Ein geeigneter kurzkettiger Kohlenhydrat-Ether ist beispielsweise Methylcellulose.

Der Einsatz von organischen Sauerstoff-Heteroverbindungen bringt folgende verfahrenstechnische und wirtschaftliche Vorteile gegenüber dem beim Stand der Technik verwendeten Ammoniak, Harnstoff und deren Lösungen:
- frei von Stickstoffverbindungen
- keine Lösung eines Gases in Wasser
- keine korrosiven Eigenschaften bei Kupfer- und Kupferlegierung (Behälter, Armaturen und Leitungen)
- weitgehende chemische Stabilität
- weiteres Reaktionsfenster und damit größeres Anwendungsgebiet
- kein Ammoniakschlupf aus dem Reaktionsmittel
- keine Konkurrenz zur Düngemittelindustrie
- chemisch technische Standardverbindungen
- insbesondere PEG, POM und POM-C sind nicht gesundheitsschädlich
- insbesondere PEG, POM und POM-C sind nicht umweltgefährdend

Erfindungsgemäß können auch organische Stickstoff-Heteroverbindungen als Reduktionsmittel beim Entsticken heißer Gase eingesetzt werden. Der in den Verbindungen enthaltene Stickstoff wird in der Pyrolysereaktion in Ammoniak und Stickstoffgas gebunden. Die Bindung in Stickstoffgas hat praktisch keinen Einfluss auf die Hauptreaktion der Stickstoffreduktion. Die Verwendung der Stickstoff-Heteroverbindungen ist in speziellen Anwendungsfällen von Vorteil.

Bevorzugt eingesetzte Stickstoff-Heteroverbindungen sind
- Diethylentriamin, flüssig, Einsatz ab ca. 210 °C
- Urotropin (Hexamethylentetramin), fest, Einsatz ab ca. 260 °C
- Cyclen (1,4,7,10-Tetraazacyclododecan), fest, Einsatz ab ca. 200 °C

Die bei der Verwendung organischer Stickstoff-Heteroverbindungen ablaufenden Reaktionen werden nachstehend (Reaktion 11 und 12) anhand von Urotropin und Diethylentriamin dargestellt.
Reaktion 11: Pyrolyse von Urotropin zu Methylen, Ammoniak und Stickstoff

   (CH₂)₆(NH)₄ → 6 :CH₂ + NH₃ + 1½ N₂
Reaktion 12: Pyrolyse von Diethylentriamin zu Methylen, Methan, Ammoniak und Stickstoff

   H₂N-CH₂-CH₂-NH-CH₂-CH₂-NH₂ → 3 :CH₂ + CH₄ + NH₃ + N₂

Erfindungsgemäß kommt das Reduktionsmittel, das mindestens eine flüssige oder lösliche organische Stickstoff-Heteroverbindung aufweist, in einem Lösungsmittel gelöst zum Einsatz. Das verwendete Lösungsmittel ist vorzugsweise aus der aus Wasser, Methanol, Methanol-Wasser-Gemischen, Ethanol, Ethanol-Wasser-Gemischen, Methanol-Ethanol-Gemischen, Methanol-Ethanol-Wasser-Gemischen, Isopropanol, Isopropanol-Wasser-Gemischen, Isopropanol-Methanol-Gemischen, Isopropanol-Methanol-Wasser-Gemischen, Isopropanol-Ethanol-Gemischen, Isopropanol-Ethanol-Wasser-Gemischen, Isopropanol-Methanol-Ethanol-Gemischen und Isopropanol-Methanol-Ethanol-Wasser-Gemischen bestehenden Gruppe ausgewählt.

Erfindungsgemäß können auch Schwefel-Heteroverbindungen als Reduktionsmittel beim Entsticken heißer Gase eingesetzt werden. Der in den Verbindungen enthaltene Schwefel wird in der Pyrolysereaktion in Schwefelwasserstoff gebunden. Die Verwendung von Schwefel-Heteroverbindungen ist in speziellen Anwendungsfällen vorteilhaft.

Die organische Heteroverbindung bzw. die organischen Heteroverbindungen werden als Substanz(en), Gemisch oder als Lösung bzw. Suspension, und zwar sowohl als Lösung bzw. Suspension der Substanz(en) als auch eines Substanzgemischs, verwendet. Die Flüssigkeit wird in das heiße Gas mittels einer technisch üblichen Zerstäuber-Einrichtung, z.B. einer Düsenlanze oder dergleichen, dosiert. Dabei ist eine Gastemperatur von mehr als 150 °C (423,15 K) für die Verdampfung der organischen Sauerstoffverbindung(en) und gegebenenfalls des Lösungsmittel(gemisch)s erforderlich. Die Dosierung kann sowohl in ein ruhendes Gas, z.B. in einer Reaktionskammer, aber auch in einen Gasstrom, z.B. in einer rohrgeführten Reaktionstrecke, erfolgen.

Die industriellen Anwendungen, für die das erfindungsgemäße Verfahren geeignet ist, sind beispielsweise Kohlekraftwerke, Müllverbrennungsanlagen, Zementwerke und Anlagen der keramischen Industrie oder der Glasindustrie.

Die erfindungsgemäße Verwendung mindestens einer organischen Sauerstoffverbindung als Reduktionsmittel in einem Verfahren zur Entstickung heißer Gase bringt eine Reihe von Vorteilen mit sich. Einer dieser Vorteile besteht in einer Vergrößerung des optimalen Temperaturfensters für die NOₓ-Reduktion sowie auch einer Verschiebung des Temperaturfensters zu einem niedrigeren Temperaturbereich, was insgesamt eine Erhöhung der Effizienz des Verfahrens ermöglicht. Durch eine geeignete Kombination von Reduktionsmitteln kann außerdem ein Synergieeffekt erreicht werden. Weiters wird bei Verwendung nichttoxischer organischer Sauerstoffverbindungen die Handhabung und Aufbereitung des Reduktionsmittels vereinfacht und die Gefahr einer Umweltbelastung verringert oder eliminiert. Schließlich ist auch eine Verringerung des Reduktionsmittelverbrauchs möglich.

Weiters besteht aufgrund der Vielfalt der einsetzbaren Substanzen die Möglichkeit, ein bestimmtes NOₓ-Reduktionsmittel für spezielle Reaktionsbedingungen zu kreieren und zu optimieren. Die unterschiedlichen Aggregatzustände der Vorläufersubstanzen eröffnen auch die Möglichkeit des Einsatzes von anderen Technologien, als z.B. der Eindüsung in das heiße Gas. Beispielweise kann POM-Kalkstein-Granulat, aber auch PEG-Kalkstein-Granulat in einer Wirbelschicht zum Einsatz kommen. Ein anderes Anwendungsbeispiel wäre die Ausführung von PEG-Wachsbeschichtungen oder Rieselfilmen an den Wandungen von Kontaktstrecken des heißen Gases.

Im Falle der Verwendung der Polyethylenglykole und der Polyoxymethylene ergeben sich aus der Unbedenklichkeit beider Stoffgruppen weitere sehr wesentliche Vorteile gegenüber herkömmlicherweise verwendetem Ammoniak, Harnstoff und deren Lösungen. Polyethylenglykole und Polyoxymethylene gelten als ungiftig und nicht umweltgefährlich. Diese Stoffe sind chemisch stabil und dadurch leicht zu handhaben.

Gemäß einer Ausführungsform der Erfindung umfasst das Reduktionsmittel zusätzlich zu der mindestens einen organischen Heteroverbindung eine reduzierende Stickstoffverbindung, die aus der aus Harnstoff, Harnstofflösung, Ammoniak, Ammoniaklösung und deren Mischungen bestehenden Gruppe ausgewählt ist. Die organische Heteroverbindung und die reduzierende Stickstoffverbindung können gleichzeitig oder in beliebiger Reihenfolge in ein ruhendes Gas oder einen Gasstrom dosiert werden, wobei sie am selben Eindüseort oder örtlich getrennt eingebracht werden können. Die Kombination der Reduktionsmittel erfolgt also nach den Prinzipien:
a. der stofflich kombinierten Dosierung, als Substanzgemisch durch eine Zerstäuber-Einrichtungen,
b. der stofflich getrennten Dosierung durch zwei zusammenliegende Zerstäuber-Einrichtungen,
c. der stofflich und örtlich getrennten Dosierung durch zwei örtlich getrennte Zerstäuber-Einrichtungen
in das heiße Gas.

Die Fig. 1 zeigt eine Übersicht des typischen nicht katalysierten NOₓ-Reduktionsverhaltens von auf NH₃ basierenden Reduktionsmitteln (durchbrochene Linie) und auf erfindungsgemäß verwendeten, organischen Heteroverbindungen basierenden (durchgezogene Linie) Reduktionsmitteln. Die Reduktionsrate berechnet sich aus Mol reduziertes NOₓ (Anfangskonzentration minus NOₓ-Endkonzentration) pro Mol eingesetztem Reduktionsmitteläquivalent, NH₃ bzw. :CH₂.

Nachstehend wird die Erfindung anhand von nicht einschränkenden Beispielen weiter erläutert.

### Beispiele

### Beispiel 1: Einsatz von PEG 200 als Reinstoff in einem heißen Gasstrom unter Einsatz eines Katalysators

In diesem Beispiel wird flüssiges PEG 200 (im Folgenden Reaktionsmittel genannt) als Reinstoff angewendet. Die Fig. 2 zeigt ein Flussdiagramm des Verfahrensablaufs. In einen heißen Gasstrom, hier nach einem Verbrennungsmotor bei 300 °C, wird das Reaktionsmittel Sensoren-geführt dosiert. Dazu erfolgt die Entnahme aus einem Vorratstank mittels einer Dosierpumpe. Diese bringt die Flüssigkeit mit Druck in eine Vorkammer, in welcher ein Treibgas, hier komprimiertes Motoren-Abgas als Treibmittel, in einem vorgegebenen Verhältnis beaufschlagt wird. Weiters erfolgt hier eine Vorwärmung. Aus dieser Vorkammer tritt das Reaktionsmittel zusammen mit dem Treibgas in den Mischkanal, welcher sich vor dem Katalysator befindet. Im Mischkanal findet aufgrund der durch das Treibgas fein verteilten Tröpfchen eine spontane Pyrolyse statt. Der Katalysator besteht aus einem Wabenkörper aus Cordierit-Keramik, welcher mit einer reaktiven Beschichtung aus Platinmetallen versehen ist. Im Katalysator erfolgen Oberflächenreaktionen, bei denen das bereits vorpyrolysierte Reduktionsmittel weiter zu Methylen zerfällt und die im Abgasstrom enthaltenen Stickoxide reduziert. Die Dosierung von PEG 200 erfolgt bezogen auf Methylen-Äquivalente leicht überstöchiometrisch (Faktor 1,1 bis 1,5). Die Effizienz der NOₓ-Reduktion hängt von der Ausgangskonzentration an NO_{X}, der Katalysatorqualität und vom Motorbetriebszustand ab und liegt zwischen 75 % und 99 %.

### Beispiel 2: Einsatz von PEG 2000 als Lösung in einem heißen Gasstrom

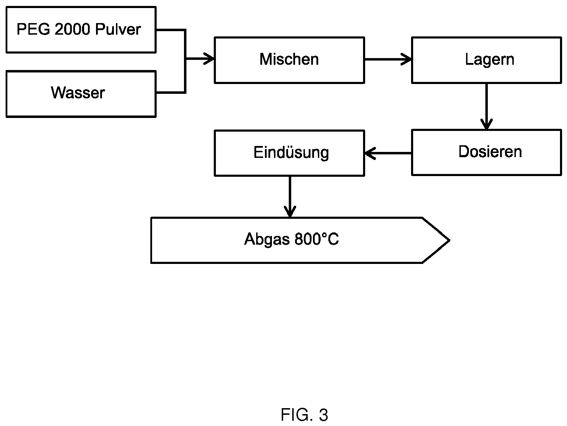

In diesem Beispiel wird festes PEG 2000 (im Folgenden Reaktionsmittel genannt) als Lösung angewendet. Die Fig. 3 zeigt ein Flussdiagramm des Verfahrensablaufs. Im ersten Schritt erfolgt der Lösevorgang in demineralisiertem Wasser, in diesem Beispiel mit 20 Massenprozent Reduktionsmittel. Dazu wird das Wasser in einem Rührbehälter vorgelegt und mittels Dosierwaage das Reduktionsmittel, hier in Flockenform, unter stetigem Rühren zugegeben. Die chargenweise erzeugte Lösung wird in einen Vorratstank gepumpt und für die Anwendung vorgehalten. Die Dosierung des Reaktionsmittels erfolgt Sensoren-geführt. Dazu erfolgt die Entnahme aus einem Vorratstank mittels einer Dosierpumpe. Die Lösung wird mittels der Dosierpumpe auf den Einspritzdruck gebracht. Die Lösung wird in den heißen Abgasstrom, hier nach einer Brennkammer mit 800 °C, versprüht. Die Reduktionsreaktion findet entlang der Misch- und Reaktionstrecke statt, wo als erste Reaktion die Pyrolyse und somit die Bildung von Methylen erfolgt. Die Dosierung von PEG 2000 erfolgt bezogen auf Methylen-Äquivalente überstöchiometrisch (Faktor 2 bis 4). Die Effizienz der NO_{X}-Reduktion hängt von der Ausgangskonzentration an NO_{X}, dem Zerstäubungsgrad und der Verweilzeit ab und liegt zwischen 70 % und 90 %.

### Beispiel 3: Einsatz von POM als "Reaktions-Milch" in einem heißen Gasstrom

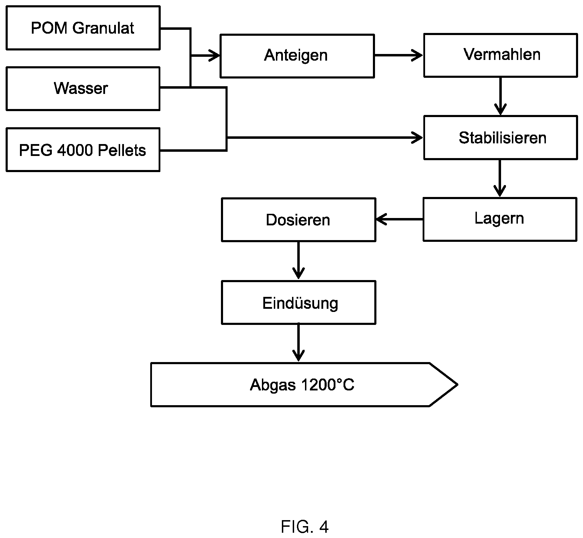

In diesem Beispiel wird festes POM als wässrige Suspension ("Reaktions-Milch") angewendet. Als Stabilisierungsmittel wird festes PEG 4000 eingesetzt. Sowohl das POM als auch das PEG 4000 sind als Feststoff in Flockenform gelagert. Die Fig. 4 zeigt ein Flussdiagramm des Verfahrensablaufs. Im ersten Schritt erfolgt das Anteigen, indem 25 Massenteile POM in einen Kneter vorgelegt werden. Hinzu kommen 5 Massenteile demineralisiertes Wasser, welche unter das POM geknetet werden. Der POM-Brei wird in eine Kugelmühle überführt, deren Mahlkörper aus Wolframcarbid bestehen. Dort findet eine Vermahlung auf eine Partikelgröße < 50 µm statt. Gegen Ende des Mahlvorganges werden zur Stabilisierung 15 Massenteile PEG 4000 und weitere 55 Massenteile demineralisiertes Wasser zugegeben. Die fertige Suspension wird in einem Rührtank bis zu ihrer Anwendung gelagert. Eine Dosierpumpe entnimmt Sensoren-geführt die anzuwendende Menge an Suspension und bringt diese auf den Einspritzdruck. Die Suspension wird in den heißen Abgasstrom, hier nach einer Brennkammer mit 1200 °C, versprüht. Die Reduktionsreaktion findet entlang der Misch- und Reaktionstrecke statt, wobei die POM-Partikel durch ihre Pyrolysekinetik die Verweilzeit erhöhen und damit die Effizienz positiv beeinflussen. Die Dosierung von POM erfolgt bezogen auf Methylen-Äquivalente leicht überstöchiometrisch (Faktor 1,1 bis 1,5). Die Effizienz der NOₓ-Reduktion hängt von der Ausgangskonzentration an NO_{X}, dem Zerstäubungsgrad und der Größe der Suspensionspartikel ab und liegt zwischen 90 % und 99 %.

### Beispiel 4: Einsatz von PEG 200 als Reinstoff in Kombination mit Harnstofflösung in einem heißen Gasstrom

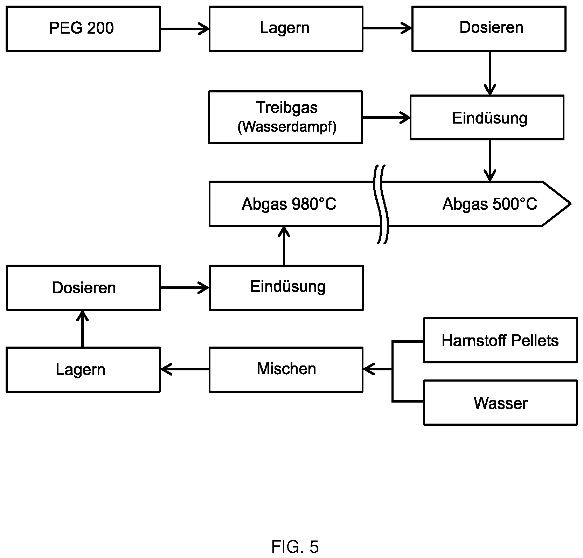

In diesem Beispiel wird flüssiges PEG 200 als sekundäres Reaktionsmittel nach der Anwendung von Harnstofflösung als primäres Reduktionsmittel angewendet. Die Fig. 5 zeigt ein Flussdiagramm des Verfahrensablaufs. In einen heißen Gasstrom, hier nach einer Brennkammer bei 980 °C, wird Harnstofflösung Sensoren-geführt bezogen auf Ammoniak-Äquivalente leicht unterstöchiometrisch (Faktor 0,8 bis 0,9) dosiert. Dadurch wird Ammoniakschlupf vermieden. Hierzu wird der Harnstoff als Feststoff in Pelletsform in demineralisiertem Wasser aufgelöst. Es wird das Wasser in einem Rührbehälter vorgelegt und der Harnstoff mittels Dosierwaage bis zu einer Konzentration von 40 Massenprozent portionsweise zugegeben. Die chargenweise erzeugte Harnstofflösung wird in einen Vorratstank gepumpt und für die Anwendung vorgehalten. Die Dosierung der Harnstofflösung erfolgt Sensoren-geführt. Dazu erfolgt die Entnahme aus einem Vorratstank mittels einer Dosierpumpe. Die Harnstofflösung wird mittels der Dosierpumpe auf den Einspritzdruck gebracht. Die Harnstofflösung wird in den heißen Abgasstrom versprüht. Die erste Reduktionsreaktion findet entlang der ersten Misch- und Reaktionstrecke statt.

In diesem Beispiel wird das Abgas durch einen zwischengeschalteten Wärmetauschprozess auf 500 °C abgekühlt. Nun findet die sekundäre Reduktion statt. Es wird flüssiges PEG 200 als Reinstoff angewendet. Ebenfalls wird das PEG 200 Sensoren-geführt dosiert. Dazu erfolgt die Entnahme aus einem Vorratstank mittels einer Dosierpumpe. Diese bringt die Flüssigkeit mit Druck in eine Vorkammer, in welcher ein Treibgas, hier Wasserdampf als Treibmittel, im entsprechenden Verhältnis beaufschlagt wird. Weiters erfolgt hier eine Vorwärmung. Aus dieser Vorkammer tritt das Reaktionsmittel zusammen mit dem Treibgas in den sekundären Mischkanal. Im Mischkanal findet aufgrund der durch das Treibgas fein verteilten Tröpfchen eine spontane Pyrolyse statt. Die Reduktionsreaktion findet entlang der Misch- und Reaktionstrecke statt, wo im Zuge der Pyrolyse die Bildung von Methylen erfolgt. Die Dosierung von PEG 200 erfolgt bezogen auf Methylen-Äquivalente leicht überstöchiometrisch (Faktor 1,1 bis 1,5). Die Gesamt-Effizienz der NOₓ-Reduktion hängt von der Ausgangskonzentration an NO_{X}, den Zerstäubungsgraden und den jeweiligen Verweilzeiten ab und liegt zwischen 80 % und 95 %.

## Patentansprüche

1. Verfahren zur selektiven Reduktion von in heißen Gasen enthaltenen Stickoxiden, **dadurch gekennzeichnet, dass** mindestens eine organische Heteroverbindung, ausgewählt aus organischen Sauerstoff-Heteroverbindungen, Stickstoff-Heteroverbindungen, Schwefel-Heteroverbindungen und Mischungen davon, als Reduktionsmittel eingesetzt wird.

2. Verfahren nach Anspruch 1, **dadurch gekennzeichnet, dass** die organische Heteroverbindung in ein ruhendes Gas oder in einen Gasstrom dosiert wird.

3. Verfahren nach Anspruch 2, **dadurch gekennzeichnet, dass** die organische Heteroverbindung eine Sauerstoff-Heteroverbindung ist, ausgewählt aus geradkettigen, verzweigten oder ringförmigen Ethern und geradkettigen, verzweigten oder ringförmigen Polyethern aliphatischer Kohlenwasserstoffe.

4. Verfahren nach Anspruch 3, **dadurch gekennzeichnet, dass** die organische Sauerstoff-Heteroverbindung aus der aus Trioxan, Ethylmethylether, Diethylether, Ethylglykol, Methylglykol, Ethylenglykol-dimethylether, Diethylenglykol, Triethylenglykol, Diethylenglykol-monoethylether, Diethylenglykol-diethylether, Diethylenglykol-dimethylether, Diisopropylether, 1,1,3,3-Tetramethoxypropan, Neopentylglykol-diglycidylether, Tetrahydropyran, Dioxan, 2-Tetrahydropyranol, 5-m-Dioxanol, 1,4-Dioxan-2,5-diol und Kronenethern bestehenden Gruppe ausgewählt ist.

5. Verfahren nach Anspruch 3, **dadurch gekennzeichnet, dass** die organische Sauerstoff-Heteroverbindung ein Polyethylenglykol oder eine Mischung von Polyethylenglykolen ist, vorzugsweise ausgewählt aus Polyethylenglykolen mit einer relativen Molekülmasse von mindestens etwa 200 bis einschließlich etwa 35000.

6. Verfahren nach Anspruch 2, **dadurch gekennzeichnet, dass** die organische Heteroverbindung eine Sauerstoff-Heteroverbindung ist, ausgewählt aus geradekettigen, verzweigten oder ringförmigen Alkoholen und geradkettigen, verzweigten oder ringförmigen Polyalkoholen aliphatischer Kohlenwasserstoffe.

7. Verfahren nach Anspruch 6, **dadurch gekennzeichnet, dass** die organische Sauerstoff-Heteroverbindung aus der aus Propanol, Isopropanol, Butanol, Isobutanol, t-Butanol, Glycerol, Cyclohexanol, Cyclohexandiol und Cyclohexanhexol (Inositol) bestehenden Gruppe ausgewählt ist.

8. Verfahren nach Anspruch 2, **dadurch gekennzeichnet, dass** ein beliebiges Gemisch von geradkettigen, verzweigten oder ringförmigen Ethern/Polyethern aliphatischer Kohlenwasserstoffe und geradkettigen, verzweigten oder ringförmigen Alkoholen/Polyalkoholen aliphatischer Kohlenwasserstoffe als Reduktionsmittel verwendet wird.

9. Verfahren nach Anspruch 8, **dadurch gekennzeichnet, dass** ein beliebiges Gemisch von Trioxan, Ethylmethylether, Diethylether, Ethylglykol, Methylglykol, Ethylenglykol-dimethylether, Diethylenglykol, Triethylenglykol, Polyethylenglykolen, Diethylenglykolmonoethylether, Diethylenglykoldiethylether, Diethylenglykol-dimethylether, Diisopropylether, 1,1,3,3-Tetramethoxypropan, Neopentyl-glykol-diglycidyl-ether, Tetrahydropyran, Dioxan, 2-Tetrahydropyranol, 5-m-Dioxanol, 1,4-Dioxan-2,5-diol, Kronenethern, Propanol, Isopropanol, Butanol, Isobutanol, t-Butanol, Glycerol, Cyclohexanol, Cyclohexandiol und Cyclohexanhexol (Inositol) als Reduktionsmittel verwendet wird.

10. Verfahren nach Anspruch 2, **dadurch gekennzeichnet, dass** die organische Heteroverbindung eine Sauerstoff-Heteroverbindung ist, ausgewählt aus Polyoxymethylen als Paraformaldehyd, Polyoxymethylen als stabilisiertes Polymer (POM), Polyoxymethylen-Copolymeren (POM-C) und Mischungen davon.

11. Verfahren nach Anspruch 10, **dadurch gekennzeichnet, dass** eine Lösung oder Suspension von Polyoxymethylen als Paraformaldehyd, Polyoxymethylen als stabilisiertes Polymer (POM), Polyoxymethylen-Copolymeren (POM-C) oder deren Mischungen verwendet wird.

12. Verfahren nach Anspruch 11, **dadurch gekennzeichnet, dass** ein Lösungsvermittler oder Stabilisator, vorzugsweise ausgewählt aus Methanol, Ethanol und Isopropanol, in den Suspensionen und Mischungenenthalten ist.

13. Verfahren nach Anspruch 5 oder 8, **dadurch gekennzeichnet, dass** zusätzlich mindestens eines aus der Gruppe Polyoxymethylen als Paraformaldehyd, Polyoxymethylen als stabilisiertes Polymer (POM) und Polyoxymethylen-Copolymere (POM-C) enthalten ist.

14. Verfahren nach Anspruch 2, **dadurch gekennzeichnet, dass** die organische Heteroverbindung eine Mischung aus
(a) mindestens einer Sauerstoff-Heteroverbindung, ausgewählt aus Trioxan, Methylglykol, Ethylglykol, Diethylenglykol, Diethylenglykol-monoethylether, Triethylenglykol, Diethylenglykol-diethylether und einem Polyethyenglykol von PEG 200 bis einschließlich PEG 35000, und
(b) mindestens einer Sauerstoff-Heteroverbindung, ausgewählt aus Polyoxymethylen als Paraformaldehyd, Polyoxymethylen als stabilisiertes Polymeres (POM) und Polyoxymethylen-Copolymeren (POM-C), ist.

15. Verfahren nach Anspruch 2, **dadurch gekennzeichnet, dass** die organische Heteroverbindung eine organische Stickstoff-Heteroverbindung ist, vorzugsweise ausgewählt aus Diethylentriamin, Urotropin (Hexamethylentetramin), Cyclen (1,4,7,10-Tetraazacyclododecan) und Mischungen davon.

16. Verfahren nach Anspruch 15, **dadurch gekennzeichnet, dass** eine Lösung der aus Diethylentriamin, Urotropin (Hexamethylentetramin), Cyclen (1,4,7,10-Tetraazacyclododecan) und deren Mischungen ausgewählten organischen Stickstoff-Heteroverbindung als Reduktionsmittel verwendet wird.

17. Verfahren nach Anspruch 2, **dadurch gekennzeichnet, dass** die organische Heteroverbindung eine Mischung aus
(a) mindestens einer Sauerstoff-Heteroverbindung, ausgewählt aus Trioxan, Methylglykol, Ethylglykol, Diethylenglykol, Diethylenglykol-monoethylether, Triethylenglykol, Diethylenglykol-diethylether, einem Polyethyenglykol von PEG 200 bis einschließlich PEG 35000, Polyoxymethylen als Paraformaldehyd, Polyoxymethylen als stabilisiertes Polymer (POM) und Polyoxymethylen-Copolymeren (POM-C), und
(b) mindestens einer Stickstoff-Heteroverbindung, ausgewählt aus Diethylentriamin, Urotropin (Hexamethylentetramin) und Cyclen (1,4,7,10-Tetraazacyclododecan), ist.

18. Verfahren nach einem der vorhergehenden Ansprüche, **dadurch gekennzeichnet, dass** ein Lösungsmittel verwendet wird, das vorzugsweise aus der Gruppe, bestehend aus Wasser, Methanol, Ethanol, Isopropanol und beliebigen Gemischen davon, ausgewählt ist.

19. Verfahren nach Anspruch 18, **dadurch gekennzeichnet, dass** die Lösung ferner kurzkettige Kohlenhydrat-Ether, vorzugsweise kurzkettige Kohlenhydrat-Ether mit einer Molekülmasse von höchstens 1000 g/mol enthält.

20. Verfahren nach Anspruch 19, **dadurch gekennzeichnet, dass** der Kohlenhydrat-Ether Methylcellulose ist.

21. Verfahren nach einem der vorhergehenden Ansprüche, **dadurch gekennzeichnet, dass** zusätzlich eine reduzierende Stickstoffverbindung, ausgewählt aus der aus Harnstoff, Harnstofflösung, Ammoniak, Ammoniaklösung und deren Gemischen bestehenden Gruppe, eingesetzt wird.

22. Verfahren nach Anspruch 21, **dadurch gekennzeichnet, dass** die mindestens eine organische Heteroverbindung und die reduzierende Stickstoffverbindung gleichzeitig oder in beliebiger Reihenfolge, am selben Ort oder örtlich getrennt, in ein ruhendes Gas oder einen Gasstrom dosiert werden.

23. Verwendung mindestens einer organischen Heteroverbindung, ausgewählt aus organischen Sauerstoff-Heteroverbindungen, Stickstoff-Heteroverbindungen, Schwefel-Heteroverbindungen und Mischungen davon, als Reduktionsmittel in einem Verfahren zur selektiven Reduktion von in heißen Gasen enthaltenen Stickoxiden.

24. Vorrichtung zur Reduktion von in heißen Gasen enthaltenen Stickoxiden nach dem Verfahren gemäß einem der Ansprüche 1 bis 22.
